(19) Europäisches Patentamt
European Patent Office
Office européen des brevets

(11) **EP 4 403 335 A1**

(12) **EUROPEAN PATENT APPLICATION**
published in accordance with Art. 153(4) EPC

(43) Date of publication:
**24.07.2024 Bulletin 2024/30**

(51) International Patent Classification (IPC):
***B29C 64/106*** (2017.01)     ***B29C 64/10*** (2017.01)
***G06T 7/80*** (2017.01)

(21) Application number: **22869376.8**

(22) Date of filing: **16.09.2022**

(52) Cooperative Patent Classification (CPC):
**B29C 64/10; B29C 64/106; B29C 64/124;
B29C 64/264; B29C 64/386; B33Y 10/00;
B33Y 30/00; B33Y 50/00;** G06T 7/80

(86) International application number:
**PCT/CN2022/119218**

(87) International publication number:
**WO 2023/041009 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2021 CN 202111113482**

(71) Applicant: **Guangzhou Heygears IMC. Inc
Guangzhou, Guangdong 510535 (CN)**

(72) Inventors:
• **DING, Peng**
  **Guangzhou, Guangdong 510535 (CN)**
• **WAN, Xin**
  **Guangzhou, Guangdong 510535 (CN)**
• **HU, Jun**
  **Guangzhou, Guangdong 510535 (CN)**
• **XIAO, Hongquan**
  **Guangzhou, Guangdong 510535 (CN)**

(74) Representative: **Studio Torta S.p.A.
Via Viotti, 9
10121 Torino (IT)**

(54) **CALIBRATION METHOD FOR ASSEMBLING LIGHT SOURCE MODULES, PROJECTION METHOD, AND 3D PRINTING METHOD**

(57)     Provided are a calibration method for splicing light source modules, a projection method, a 3D printing method, a calibration apparatus, a 3D printer, and a non-volatile computer-readable storage medium. There are at least two light source modules. The calibration method includes: performing optical calibration processing on each of the light source modules, wherein a splicing overlapping area is present in projection regions of the light source modules subjected to optical calibration processing; and performing, on the basis of the splicing overlapping area, calibration accuracy inspection on each of the light source modules subjected to optical calibration processing.

Fig. 1

S110
Optical calibration processing is performed on each of the light source modules, wherein a splicing overlapping area is present in projection regions of the light source modules subjected to optical calibration processing

S120
Calibration accuracy inspection for splicing overlapping is performed, on the basis of the splicing overlapping area, on each of the light source modules subjected to optical calibration processing

EP 4 403 335 A1

**Description**

**Cross-Reference to Related Application**

The present disclosure claims the priority of the Chinese patent application filed to the China National Intellectual Property Administration on September 18th, 2021, with the application number of 202111113482.8 and the title of "Calibration Method for Splicing Light Source Modules, Projection Method, and 3D Printing Method", which is incorporated herein in its entirety by reference.

**Technical Field**

The present disclosure relates to a calibration method for splicing light source modules, a projection method, and a 3D printing method.

**Background**

The commonly used 3D printing technology by digital light processing is digital light processing (DLP) technology and liquid crystal display (LCD) technology. The DLP technology is developed by Texas Instruments, referring to modulating an illumination surface light source by a digital micromirror device (DMD), projecting to a receiving screen for imaging, and outputting graphics to be exposed. The DMD is the basis of DLP, and a DMD may be simply described as a semiconductor optical switch. The LCD technology is similar to the DLP, that is, output light is modulated by a liquid crystal layer within an LCD screen to display images to be exposed.

The DMD of Texas Instruments has an upper limit on the optical power of the modulated light source, and the projection accuracy may decrease as a projection format increases. 3D printing devices using the DLP technology have a maximum format limit and a maximum printing accuracy limit.

However, the inventor realizes that there are attempts in the related art to splice projection formats of a DLP optical machine. However, since an optical system of the optical machine has optical aberrations, if a plurality of projection formats of the DLP optical machine are spliced stiffly, information at edges of the formats may be lost, and splicing defects such as seams, bumps and so on may be produced when in use in the 3D printing field, which affects the use of printed parts.

**SUMMARY**

Embodiments of the present disclosure provide a calibration method for splicing light source modules, a projection method, a 3D printing method, and a calibration system, aiming to solve the problem of splicing defects generated by splicing of a plurality of optical machines, and as to improve a projection effect and a 3D printing effect.

In a first aspect, the embodiments of the present disclosure provide a calibration method for splicing light source modules. There are at least two light source modules. The calibration method includes: performing optical calibration processing on each of the light source modules, wherein an splicing overlapping area is present in projection regions of the light source modules; and performing, on a basis of the splicing overlapping area, calibration accuracy inspection for splicing overlapping of each of the light source modules subjected to optical calibration processing.

In a second aspect, the embodiments of the present disclosure provide a projection method. There are at least two light source modules. The projection method includes: performing segmentation processing on a slice image to be projected according to a projection region of each of light source modules to obtain a plurality of segmented images; and performing gradient processing on image information of splicing overlapping parts of the plurality of segmented images, and transmitting the processed segmented images to the corresponding light source modules respectively, wherein each of the light source modules is obtained by being calibrated through any one of the calibration methods described above.

In a third aspect, the embodiments of the present disclosure provide a 3D printing method. The 3D printing method includes: slicing a three-dimensional data model to obtain a plurality of slice images; and sequentially performing any one of the projection methods described above on each of the plurality of slice images according to a predetermined projection order of the plurality of slice images.

In a fourth aspect, the embodiments of the present disclosure provide a calibration apparatus for splicing light source modules. There are at least two light source modules. The calibration apparatus includes: a calibration apparatus, configured to perform optical calibration processing on each of the light source modules, wherein an splicing overlapping area is present in projection regions of the light source modules; and an inspection apparatus, configured to perform, in the splicing overlapping area, calibration accuracy inspection for splicing overlapping of each of the light source modules subjected to optical calibration processing.

In a fifth aspect, the embodiments of the present disclosure provide a 3D printer. The 3D printer includes a memory and one or more processors, the memory having stored a computer-readable instruction, and the processor, when executing the computer-readable instruction, implements the steps of any one of the methods described above.

In a sixth aspect, the embodiments of the present disclosure provide a non-volatile computer-readable storage medium having stored thereon a computer-readable instruction. When the computer-readable instruction is executed by a processor, the steps of any one of the methods described above may be implemented.

The embodiments of the present disclosure provide the calibration method for splicing the light source modules, the projection method, the 3D printing method, the calibration apparatus, the 3D printer, and the computer-readable storage medium. There are at least two light source modules. The calibration method includes: performing optical calibration processing on each of the light source modules, wherein the splicing overlapping area is present in the projection regions of the light source modules; and performing, on the basis of the splicing overlapping area, calibration accuracy inspection for splicing overlapping of each of the light source modules subjected to the optical calibration processing. According to the embodiments of the present disclosure, by performing calibration processing in the splicing process of the light source modules, splicing ripples and disturbances of pixel information during splicing may be avoided, thereby solving the problem of splicing defects generated by splicing of the light source modules and improving the projection effect and the 3D printing effect.

**Brief Description of the Drawings**

In order to more clearly illustrate the technical solutions of the embodiments of the present disclosure, accompanying drawings that are to be referred for description of the embodiments will be briefly described hereinafter. Apparently, the drawings described hereinafter illustrate some embodiments of the present disclosure, and a person of ordinary skill in the art may also derive other drawings based on the drawings described herein without any creative effort.

Fig. 1 is a first schematic flow diagram of a calibration method for splicing light source modules according to one or more embodiments.

Fig. 2 is a second schematic flow diagram of a calibration method for splicing light source modules according to one or more embodiments.

Fig. 3 is a schematic flow diagram of a step of physically splicing each light source module according to one or more embodiments.

Fig. 4 is an exemplary schematic diagram of devices involved in a calibration method for splicing light source modules according to one or more embodiments.

Fig. 5 is an exemplary schematic diagram of a positioning frame for physical splicing in a calibration method for splicing light source modules according to one or more embodiments.

Fig. 6 is a schematic flow diagram of a step of performing calibration accuracy inspection for splicing overlapping of each light source module subjected to optical calibration processing according to one or more embodiments.

Fig. 7 is an exemplary schematic diagram of a calibration tool in a calibration method for splicing light source modules according to one or more embodiments.

Fig. 8 is a schematic flow diagram of a step of performing optical calibration processing on each light source module according to one or more embodiments.

Fig. 9 is a standard projection map in a calibration method for splicing light source modules according to one or more embodiments.

Fig. 10 is a schematic flow diagram of a step of acquiring a spacing between projection identification point and calibration identification point based on the same coordinate system according to one or more embodiments.

Fig. 11 is a schematic flow diagram of a projection method according to one or more embodiments.

Fig. 12 is a schematic flow diagram of a step of slicing a three-dimensional data model according to one or more embodiments.

Fig. 13 is a physical splicing effect diagram according to one or more embodiments.

Fig. 14 is a schematic block diagram of a calibration apparatus for splicing light source modules according to one or more embodiments.

Fig. 15 is a schematic structural diagram of a printing surface and a molding platform according to one or more embodiments.

Fig. 16 is a schematic structural diagram of a printing surface and a molding tray according to one or more embodiments.

## Detailed Description of the Embodiments

The technical solutions according to the embodiments of the present disclosure will be clearly and completely described below with reference to the accompanying drawings according to the embodiments of the present disclosure. Apparently, the described embodiments are a part of the embodiments of the present disclosure, rather than all the embodiments. All other embodiments derived by a person of ordinary skill in the art from the embodiments of the present disclosure without any creative effort fall within the scope of protection of the present disclosure.

It is to be understood that, when used in this specification and the appended claims, the terms "include" and "have" indicate the presence of the described features, wholes, steps, operations, elements and/or components, but do not exclude the presence or addition of one or more other features, wholes, steps, operations, elements, components and/or collections thereof.

It is also to be understood that the terms as used in the specification of the present disclosure are used merely for the purpose of describing particular embodiments and are not intended to limit the present disclosure. As used in the specification and the appended claims of the present disclosure, the singular forms "a", "one" and "the" are intended to include the plural form unless the context clearly indicates otherwise.

It is to be further understood that the term "and/or" as used in the specification and the appended claims of the present disclosure refers to and includes any combination and all possible combinations of one or more of the items listed in association.

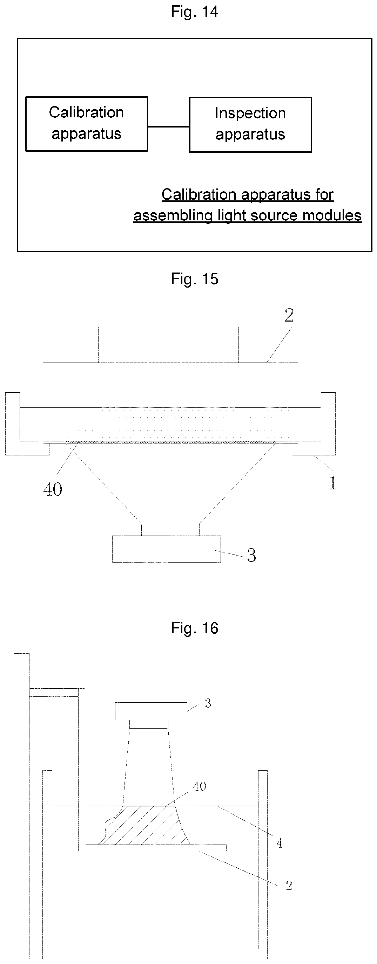

The definition of a printing surface: After a projection image is illuminated by an optical machine onto a printing surface, light-curable liquid is cured on the interface to obtain a cured sheet matching to a contour of the projection image. For example, for face-exposed light-curing 3D printing with upward projection, the printing surface is a liquid level of the light-curable liquid; and for face-exposed light-curing 3D printing with downward projection, the printing surface is located at a bottom of a tray. It is to be reminded that the printing surface referred to herein is merely a position or orientation relative to the optical machine, and in determining the printing surface, on the one hand, the position of the printing surface is quickly recognized on the printer by referring to the position of some parts of the actual printer (for example, the tray 1, a molding platform/molding tray 2, a light source 3, a trough resin liquid 4, and the printing surface 40, as shown in Fig. 15 and Fig. 16), where Fig. 15 is a downward projection 3D printer, and Fig. 16 is an upward projection 3D printer; and on the other hand, if the aforementioned parts are missing, position data information of the printing surface may also be determined on the basis of position data information of the aforementioned parts.

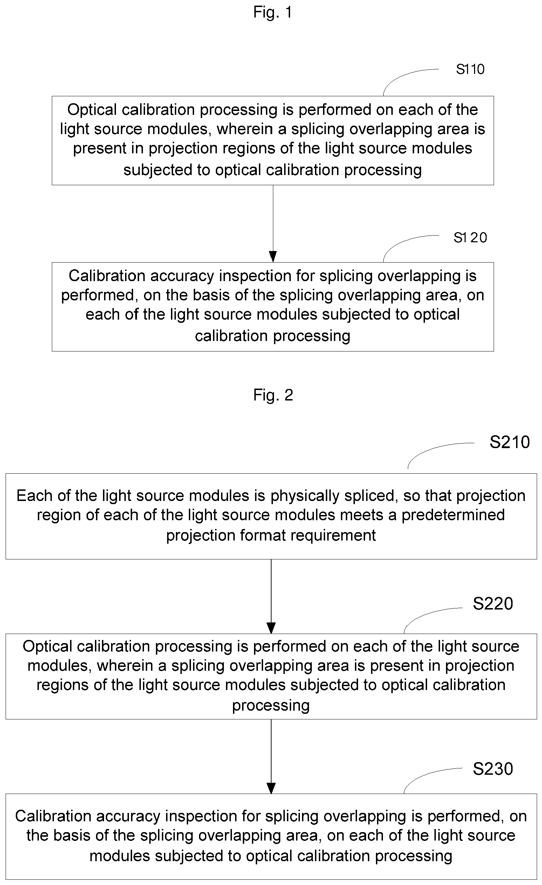

Fig. 1 shows a calibration method for splicing light source modules according to an embodiment of the present disclosure. There are at least two light source modules. As shown in Fig. 1, the calibration method includes the following steps:

S110: Optical calibration processing is performed on each of the light source modules, wherein a splicing overlapping area is present in projection regions of the light source modules subjected to optical calibration processing.

A light source module may be any type of display components capable of displaying exposure image information in the art, which may be a laser display device capable of displaying the exposure image information, or a projection device capable of projecting the exposure image information. For example, the light source module may be any one or any combination of a DLP projection module, an LCD projection module, an OLED projection module, a liquid crystal on silicon (LCOS) projection module, a micro light emitting diode (Micro-Led) module, a mini light emitting diode (Mini-Led) module, an LCD module, an OLED module, and a silicon X-tal reflective diode (SXRD) module, and may also be a Micro-oled module or a Mini-oled module. Optical calibration refers to a processing method for correcting an image displayed by a light source module.

For example, there may be two or more light source modules, a splicing method of which may be two-dimensional extended splicing based on any light source module, or one-dimensional extended splicing based on any light source module. For example, if the number of the light source modules is 4, two-dimensional extended splicing refers to splicing one light source module in the transverse, longitudinal and diagonal directions of any one of the light source modules respectively. The one-dimensional extended splicing refers to splicing three light source modules in the transverse or longitudinal direction of any one of the light source modules. It is to be noted that the above transverse, longitudinal and diagonal directions are merely used for exemplary illustration, and do not constitute a limiting illustration of the one-dimensional extended splicing and the two-dimensional extended splicing.

The projection region described above may refer to a projection region projected on the printing surface, or a projection region projected on a calibration tool. In other words, the splicing overlapping area being present in the projection regions, in terms of the actual display situation, may refer to that projection regions of a plurality of light source modules on the printing surface overlap one another, or projection regions of the plurality of light source modules on the calibration tool overlap one another. The splicing overlapping area may be present in the projection regions of the light source modules both before and after optical calibration processing.

S120: Calibration accuracy inspection for splicing overlapping is performed, on the basis of the splicing overlapping area, on each of the light source modules subjected to optical calibration processing.

The calibration accuracy inspection is to inspect a deviation generated by splicing, that is, calibration inspection. For example, the calibration accuracy may be determined on the basis of a difference between an overlapped projection feature point of each of the light source modules in the splicing overlapping area and a standard point position or a difference between a projection feature point of each of the light source modules and a standard point position. In one example, the calibration accuracy may be determined on the basis of a deviation between center coordinates of the overlapped projection feature points and photolithographic points (or referred to as calibration points or calibration identification points) on the calibration tool. In another example, the calibration accuracy may be determined on the basis of shapes of the overlapped projection feature points. In yet another example, the calibration accuracy may also be determined on the basis of an overlapping ratio of the projection feature points. In yet another example, the calibration accuracy may also be reflected by inspecting the overlapping accuracy of overlapping calibration identification points constructed in the splicing area on the basis of a deviation (or coordinate difference) of the projection feature points from the standard position. It is to be noted that the above calibration accuracy inspection methods are merely exemplary methods provided by the embodiments of the present disclosure, and in practice, any method that may achieve calibration accuracy inspection of each of the light source modules subjected to optical calibration shall fall within the scope of protection of the present disclosure. Further, in the case where the calibration accuracy inspection fails, step S110 is performed for re-calibration.

According to the calibration method described above, by performing optical calibration processing in the splicing process of the light source modules, splicing ripples and disturbances of pixel information during splicing may be avoided, thereby solving the problem of splicing defects generated by splicing of multiple light source modules and improving the projection effect and the 3D printing effect. With the solutions of this embodiment, a deviation after calibration and splicing is made to be within one pixel. In addition, this embodiment is not only applicable to the 3D printing industry, but may also be used in other industries involving DLP technology. For example, the calibration method according to this embodiment may be adopted for pattern splicing in UV-band DLP optical machines or in other DLP technology with different bands. For borderless, overlay display technologies. It is also to be noted that in specific application scenarios, the light source modules may be optical machines. By means of the above calibration method, the deviation after calibration and splicing is within one pixel, and the overall accuracy of a projection image reaches a sub-pixel level.

Fig. 2 illustrates a flow diagram involved in another calibration method. As shown in Fig. 2, before performing calibration accuracy inspection for splicing overlapping of each of the light source modules subjected to optical calibration processing, the calibration method further includes following steps.

S210: Each of the light source modules is physically spliced, so that projection region of each of the light source modules meets a predetermined projection format requirement.

Physical splicing refers to changing the projection regions of the light source modules, for example, the projection regions of the light source modules may be changed by moving the light source modules or moving a reflector. For example, the light source modules may be physically spliced by any means in the art. For example, position adjustment mechanisms for calibration may be set to physically splicing the light source modules. Each of the position adjustment mechanisms includes a light source adjustment structure that may achieve translation along XYZ axes and integral horizontal displacement and rotation by an angle. The predetermined projection format requirement may be positional requirements, dimensional requirements, etc. that need to be met by the projection regions. For example, the light source modules are moved so that the projection regions may be superimposed to completely cover a region of the printing surface. For another example, the light source modules are moved so that the projection regions are superimposed to be the same as a calibration region of the calibration tool in optical calibration processing.

S220: Optical calibration processing is performed on each of the light source modules, wherein a splicing overlapping area is present in projection regions of the light source modules subjected to optical calibration processing.

S230: Calibration accuracy inspection for splicing overlapping is performed, on the basis of the splicing overlapping area, on each of the light source modules subjected to optical calibration processing.

In this embodiment, the plurality of light source modules to be subjected to optical calibration processing are physically spliced, and then the plurality of light source modules subjected to physical splicing are calibrated for an aberration of distortion by using a calibration plate. That is, each of the light source modules is calibrated and the overall light source modules are subjected to calibration inspection. The deviation after physical splicing is within 10 pixels. By performing physical splicing prior to calibration, the projection region of each of the light source modules meets the predetermined projection format requirement, and fewer pixels are lost in the calibration process of each of the light source modules.

It is to be noted that the order in which steps S210 and S220 are performed may be interchangeable in other embodiments. For example, physical splicing in step S210 may be used to adjust the position and/or projection dimension of the light source modules by human eye observation, the accuracy of which is not as good as that of optical calibration in step S220, and thus coarse adjustment is performed before fine adjustment in accordance with the conventional operation. Moreover, in the step of optical calibration, the use of a full-width calibration plate has the advantage of both correcting optical distortion and fine-tuning the position of the projection format (the position of the projection region), because each optical machine is subjected to optical calibration on the basis of the same calibration coordinate system.

However, if optical calibration (mainly to correct the optical distortion of each of the light sources) is performed on the light source modules before physical splicing, due to the limited accuracy of physical splicing, the position of the projection format (the position of the projection region) corresponding to each of the light source modules needs to be fine-tuned in the next step, and a pixel coordinate system or a projection feature point coordinate system needs to be converted to the same coordinate system. In other words, another optical calibration is required after physical splicing is performed, but one of the purposes achieved by optical calibration this time is the translation of the pixel coordinate system or the projection feature point coordinate system. Taken together, it is more convenient to perform step S210 before step S220 than performing step S220 before step S210.

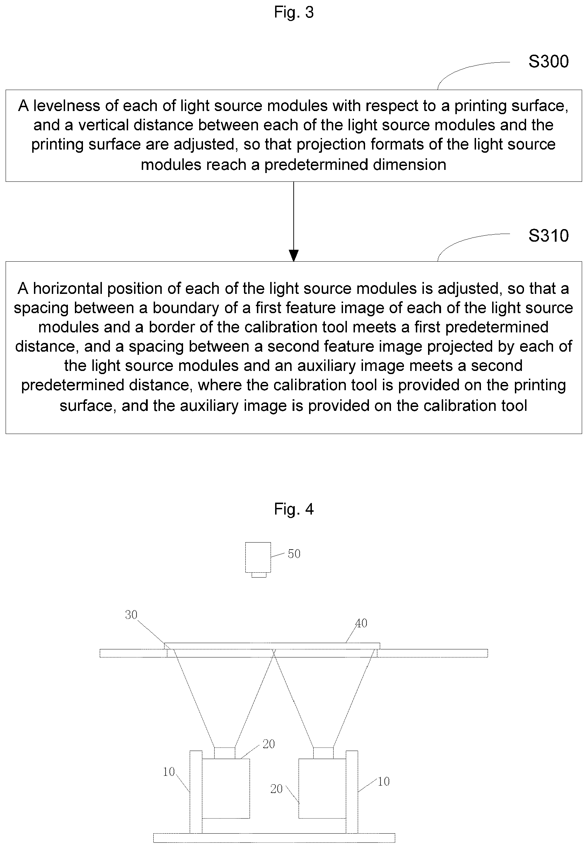

Referring to Fig. 3, which illustrates a flow diagram of physically splicing each of the light source modules, the step includes:

S310: A horizontal position of each of the light source modules is adjusted, so that a spacing between a boundary of a first feature image of each of the light source modules and a border of the calibration tool meets a first predetermined distance, and a spacing between a second feature image projected by each of the light source modules and an auxiliary image meets a second predetermined distance. The calibration tool is provided on the printing surface, and the auxiliary image is provided on the calibration tool. The calibration tool is used by an optical machine for calibration, for example, the calibration tool may be the calibration plate.

For example, a predetermined calibration tool (a positioning frame) is placed in a printing region, and the projection of a light source module is adjusted on the basis of the positioning frame, so that a to-be-spliced projection format of the light source module may be viewed through the positioning frame, and an auxiliary adjustment pattern (i.e., the above auxiliary image) is provided in the positioning frame. The light source module is set to project a first feature image which is consistent with the contour of the positioning frame, and the first feature image is a positioning image and may be an all-white image. The horizontal position of the light source module is adjusted by the light source adjustment mechanism, for example, the horizontal displacement and rotation angle of the light source module are adjusted, so that the spacing between the boundary of the first feature image of the light source module and the positioning frame meets the first predetermined distance. The first predetermined distance may be an arbitrary number obtained according to the measured demand, for example, the first predetermined distance may be 0. That is, the boundary of the first feature image of the light source module coincides with the positioning frame. The positioning image projected by each of the light source modules is replaced with a feature image corresponding to the auxiliary adjustment pattern in the positioning frame, and the horizontal displacement and rotation of each of the light source modules are adjusted, so that the spacing between the boundary of the feature image of each of the light source modules (or the boundary of the projection region) and the positioning frame (or the border of the calibration tool) meets the second predetermined distance. The second predetermined distance may be an arbitrary number obtained according to the measured demand, for example, the second predetermined distance may be 0. That is, the boundary of the feature image of each of the light source modules (or the boundary of the projection region) coincides with the positioning frame (or the border of the calibration tool).

In this embodiment, as shown in Fig. 4, the position of the light source module 20 is adjusted by using the light source adjustment structure 10. Position parameter of the light source module 20 include one or more of the following: a horizontal plane position of the light source module 20, a vertical height of the light source module 20, a rotation angle of the light source module 20 around the X-axis, a rotation angle of the light source module 20 around the Y-axis, and a rotation angle of the light source module 20 around the Z-axis.

For example, each of the light source modules 20 to be spliced is adjusted to a position parallel to the printing surface, and an overall distance between all the light source modules and the printing surface is then adjusted, so as to obtain a format with the desired printing accuracy. The light source adjustment mechanism may be achieved by mechanical structure design. In practice, as one alternative embodiment, the light source adjustment mechanism may be operated manually, and as another alternative embodiment, the light source adjustment mechanism may be set up to be driven by an electrical component (for example, a motor), so that the light source adjustment mechanism is controlled by adjusting input signals of the electrical component, so as to adjust the position of the light source module. By adjusting the position state of the light source module 20, the position of an image projected by the light source module 20 onto the printing surface 30 may change. Further, the calibration tool 40 is also provided on the printing surface, and an image of the printing surface 40 may be acquired by providing a shooting module 50. Image information corresponding to the image may include position information of calibration identification points on the calibration tool 40 and position information of projection feature points of the light source modules 20.

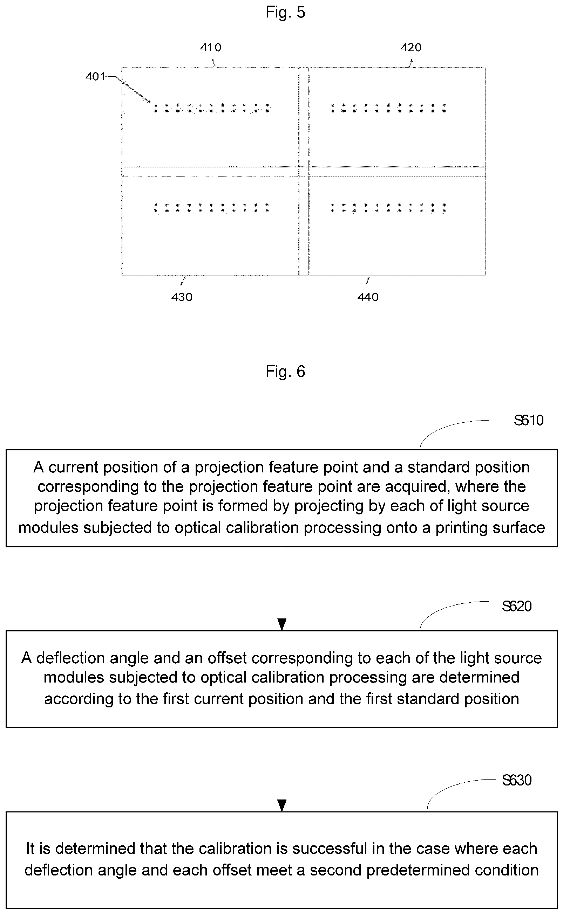

In conjunction with Fig. 5, the predetermined calibration tool (which may be the positioning frame) is placed in the printing region, and the format range of the calibration tool may be divided into positioning frames of a plurality of light source modules, for example, a positioning frame 410 for a light source module A, a positioning frame 420 for a light source module B, a positioning frame 430 for a light source module C, and a positioning frame 440 for a light source module D, as shown in the figure. The to-be-spliced projection format of each of the light source modules may be viewed through the calibration tool 40, and an auxiliary adjustment pattern 401 is provided within the calibration tool. Then, each of the light source modules 20 projects a positioning image consistent with the contour of the calibration tool, for example an all-white image. The horizontal displacement and rotation of each of the light source modules are adjusted correspondingly to visually make the boundary of the all-white image of each of the light source modules 20 coincide with the border of the calibration tool. Then the projection image is replaced, so that each of the light source modules 20 projects a feature image corresponding to the auxiliary adjustment pattern 401 within the calibration tool; and the position of each of the light source modules 20 is fine-tuned to visually make the feature image coincide with the auxiliary adjustment pattern, thereby completing physical splicing adjustment.

In operation, the positioning frames corresponding to the light source modules may be integrated into a large full-format positioning frame with a covering area the same as an area of a splicing format, so that the adjustment of the position of each of the light source modules is performed on the basis of the same realistic coordinate system. Of course, the positioning frames corresponding to the light source modules may also be independent, and when the adjustment operation of the physical splicing of a certain light source module is carried out, the positioning frame corresponding to the light source module is provided. The auxiliary adjustment pattern is mainly used for fine-tuning the position of the light source module, and the auxiliary adjustment pattern may be arbitrarily designed, for example, a dot matrix, a combination of regularly or irregularly arranged shapes, lines, characters, polygons, irregular shapes, and the like, which is not limited in the present disclosure. For exemplary explanations, referring to Fig. 5, the auxiliary adjustment pattern in this embodiment is regularly arranged dots.

The positioning frames may be molded on a light-transmissible, partially light-transmissible, or non-light-transmissible plate or sheet, as long as the projection map of the light source modules may be observed at the same time as the positioning frames.

In specific embodiments, the deviation of the optical machine subjected to physical splicing is approximately within 10 pixels (herein pixels are temporarily regarded as a unit of dimension).

In one embodiment, before adjusting a horizontal position of each of the light source modules, the calibration method further includes following steps.

S300: a levelness of each of the light source modules with respect to the printing surface, and a vertical distance between each of the light source modules and the printing surface are adjusted, so that the projection formats of the light source modules reach a predetermined dimension.

For example, the predetermined dimension may be relative to the projection format of any one of the light source modules, or may be relative to a projection format formed by all the light source modules together. In one specific example, each of the light source modules to be spliced is adjusted, so that the horizontal plane thereof and the printing surface meet a predetermined parallelism requirement; and then the overall distance between all the light source modules and the printing surface is adjusted, so that the overall projection of all the light source modules serves as the format with the desired printing accuracy. It is to be noted that the printing accuracy refers to the pixel size of the projection format, and the pixel size determines the size of the format at the same resolution.

In one embodiment, the calibration method for splicing the light source modules further includes the following steps.

The projection formats of the light source modules subjected to optical calibration processing are adjusted, so that a deflection angle and an offset of each of the projection formats based on a reference format meet a first predetermined requirement. In one example, the first predetermined requirement includes that a difference between deflection angles is within a first predetermined range, wherein each deflection angle is a deflection angle of a corresponding projection format relative to the reference format, and a difference between offsets is within a second predetermined range, wherein each offset is a offset of a corresponding projection format relative to the reference format.

The reference format may be specified according to the actual situation, for example, a format formed by the calibration identification points on the calibration tool may be used as the reference format.

For example, the position of the projection formats may be adjusted by any means. After optical calibration processing is performed on each of the light source modules, there is a specific relative positional relationship between the projection feature points of each of the light source modules and the calibration identification points (i.e., having a specific deflection angle and offset). The relative positional relationship corresponding to each of the light source modules may be different, so that the deflection angles and offsets corresponding to each of the light source modules need to be adjusted, so as to make the difference between the deflection angles is within the first predetermined range, wherein each deflection angle is a deflection angle of a corresponding projection format relative to the reference format, and the difference between the offsets is within the second predetermined range, wherein each offset is a offset of a corresponding projection format relative to the reference format. Further, both the first predetermined range and the second predetermined range may include zero, that is, the projection formats have the same deflection angle relative to the reference format, and also have the same offset

Referring to Fig. 6, which illustrates a schematic diagram of performing calibration accuracy inspection for splicing overlapping of each of the light source modules subjected to optical calibration processing, the step includes:
S610: A first current position of a projection feature point and a first standard position corresponding to the projection feature point are acquired. The projection feature point is formed by projecting by each of the light source modules subjected to optical calibration processing onto the printing surface.

The first standard position corresponding to the projection feature point may be determined by means of the calibration tool, for example, a photolithography point on the calibration tool.

For example, the first standard position and the first current position may be acquired by any means in the art, for example, the first standard position and the first current position may be recognized and acquired by means of image recognition. In one example, acquiring a current position of a projection feature point, and a standard position corresponding to the projection feature point includes: acquiring image information of the printing surface, wherein the printing surface is provided with the calibration tool, and the calibration tool is provided with a calibration identification point for identifying the standard position; and determining the first current position and the first standard position according to the image information.

S620: a deflection angle and an offset corresponding to each of the light source modules subjected to optical calibration processing are determined according to the first current position and the first standard position.

For example, the deflection angle and the offset corresponding to each of the light source modules subjected to optical calibration processing refer to a deflection angle and an offset of the projection feature point of each of the light source modules subjected to calibration relative to the calibration identification point on the calibration tool.

S630: It is determined that the calibration is successful in the case where each deflection angle and each offset meet a second predetermined condition.

The second predetermined condition includes that a deviation between the deflection angles is within a third predetermined range, and a deviation between the offsets is within a fourth predetermined range. The third predetermined range and the fourth predetermined range may include zero, that is, deflection angles of the light source modules are the same, and offsets of the light source modules are also the same, thereby meeting the requirement of splicing different light source modules. Further, the first predetermined condition further includes that the offset corresponding to any one of the light source modules is within a corresponding predetermined interval, that is, the offset of each of the light source modules needs to be within a predetermined interval to meet the requirement of calibrating each of the light source modules individually.

For example, all the light source modules project a feature map to the calibration plate, and the single light source module in each region is subjected to calibration inspection again. Projection feature points in the splicing overlapping area may overlap in an unordered manner to construct an overlapped projection feature point, and a coordinate position of the overlapped projection feature point relative to the identification point is affected by the projection feature point of each single light source module subjected to calibration, whereby a calibration error generated after overall splicing is determined. A full-format calibration identification point map is correspondingly segmented on the basis of the projection region of the single light source module, and each segmented region is consistent with a previous region corresponding to calibration of the single light source module. By repeating the calibration of the single light source module, the differences between the coordinates of the calibration identification points of the splicing overlapping area of the single light source module and the coordinates of the photolithographic points may be acquired, so as to inspect the overlapping accuracy of overlapped calibration identification points constructed in the splicing area.

In one embodiment, performing calibration accuracy inspection for splicing overlapping of each of the light source modules subjected to the optical calibration processing includes following steps.

A second current position of the overlapped projection feature point and a second standard position corresponding to the overlapped projection feature point are acquired. The overlapped projection feature point is obtained by projection of each of the light source modules subjected to the optical calibration processing in the splicing overlapping area.

For example, the position may be acquired by means of image recognition. In one specific example, acquiring a current position of a projection feature point, and a standard position corresponding to the projection feature point includes: acquiring image information of the printing surface, where the printing surface is provided with the calibration tool, and the calibration tool is provided with a calibration identification point for identifying the second standard position;

and determining the second current position and the second standard position according to the image information. It is determined that the calibration is successful in the case where a deviation value between the second current position and the second standard position meets a second predetermined condition. Further, in the case where the deviation value between the second current position and the second standard position does not meet the second predetermined condition, optical calibration processing is performed on each of the light source modules again.

For example, the calibration plate is placed on the printing surface, a light source module to be inspected and a light source module adjacent to the light source module to be inspected are set to project part of or the entire standard projection map to the calibration plate, and the projection identification points in the splicing area of the light source module to be inspected overlap to form at least one overlapped projection feature point; a captured image of the printing surface is acquired, the captured image including the overlapped projection feature point in the splicing area of the light source module to be inspected and the calibration identification point; and a difference between coordinate of the overlapped projection feature point and coordinate of the calibration identification point on the calibration plate in an image coordinate system is acquired; and the light source module to be inspected needs to be re-calibrated if the difference exceeds a predetermined error threshold.

In this embodiment, after each of the light source modules is calibrated, calibration accuracy inspection is performed on each of the light source modules. The calibration plate is re-placed on the printing surface, the light source module to be inspected and the light source module adjacent to the light source module to be inspected project part of or the entire standard projection map to the calibration plate, and calibration inspection is performed on the light source module to be inspected.

First, a contact edge of adjacent calibration regions is set as the calibration splicing area, when the adjacent light source modules project the standard projection map together, projection feature points in the calibration splicing area may overlap in an unordered manner to construct overlapped projection feature points, and coordinate positions of the overlapped projection feature points relative to the calibration identification points are affected by the projection feature points of each of the light source modules subjected to calibration, whereby a calibration error generated after overall splicing is determined.

If the splicing is successful, the overlapped projection feature points in the calibration splicing area may be the same as projection identification points without overlapping, that is, a pattern of the projection identification points is consistent with a pattern of the overlapped projection feature points, and the difference between the coordinates of the overlapped projection feature points and the coordinates of the calibration points may be very small or less than the predetermined error threshold. If the splicing fails, the pattern of the overlapped projection feature points in the calibration splicing area may be inconsistent with the pattern of the projection identification points without overlapping. For example, if a regular pattern of the projection identification points is a square, the pattern of the overlapped projection feature points becomes a rectangle, a polygon, or an irregular shape, etc., and if the regular pattern of the projection identification points is a circle, the pattern of the overlapped projection feature points becomes an ellipse or an obviously non-circular shape. In conclusion, coordinates of a center (specifically optional from the center of gravity or center of mass) of the pattern of the overlapped projected feature points are shifted compared to the original coordinates of the projection identification points, so that the difference between the coordinates of the overlapped projected feature points and the coordinates of the calibration points may be very large or exceed the predetermined error threshold.

The calibration inspection is mainly to identify the overlapped projection feature point in the calibration splicing area, so that the light source module to be inspected and the light source module adjacent to the light source module to be inspected project part of the standard projection map to the calibration plate, as long as it is ensured that the overlapped projection feature point is generated in the splicing area. Of course, for ease of operation, the light source module to be inspected and the light source module adjacent to the light source module to be inspected may project the entire standard projection map, and further, all the light source modules may project the entire standard projection map together.

After the spliced light source modules project the standard projection map as a whole, calibration inspection continues to be performed on a calibration result of each of the light source modules, and this step may determine the overlapping accuracy of the constructed overlapped calibration feature point. For example, the projection identification points are in one-to-one correspondence with the photolithographic points (i.e., the calibration identification points) on the calibration plate, and similarly, each of the overlapped calibration feature points has a corresponding calibration identification point. The captured image (specifically, a calibration plate image) of the printing surface is correspondingly segmented according to the calibration region of each of the light source modules, and each segmented region is consistent with the calibration region corresponding to each of the light source modules. Thus, the coordinate difference between the overlapped calibration feature point of each of the light source modules in the calibration splicing area and the calibration identification point may be acquired, so as to inspect the overlapping accuracy of the overlapped calibration identification points constructed in the splicing area. The predetermined error threshold may be 0.5 pixels, 1 pixel, or any value between 0 and 1 pixel.

If the difference exceeds the predetermined error threshold, the light source module to be inspected needs to be re-calibrated, and if the difference is less than the predetermined error threshold, it indicates that the calibration results meet the overlapping accuracy.

After the above operation, the deviation after calibration splicing is within one pixel, and the accuracy of the overall projection image reaches the sub-pixel level.

In one embodiment, performing optical calibration processing on each of the light source modules includes: performing optical calibration processing on each of the light source modules by using calibration tools located under the same coordinate system, or, performing optical calibration processing on the light source modules by using the same calibration tool. The coverage range of the calibration tool is greater than or equal to the projection format obtained by splicing of each of the light source modules. The calibration tool may be the calibration plate.

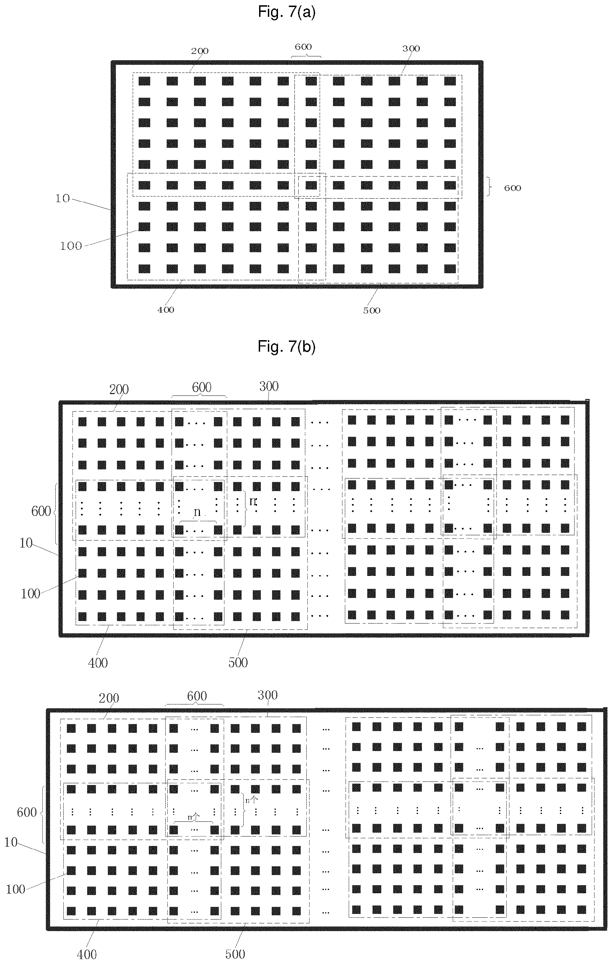

For example, all the light source modules are calibrated at the same calibration tool. As shown in Figs. 7(a) and 7(b), the calibration tool 10 is provided with a calibration identification point 100, and the coverage range of the calibration tool 10 is greater than or equal to the format after splicing. Fig. 7(a) is a splicing method in which four light source modules are spliced and the splicing overlapping area includes one calibration identification point. Fig. 7(b) is a splicing method in which n light source modules are spliced and the splicing overlapping area includes n calibration identification points. It is to be noted that there is a splicing overlapping area in the calibration region of each of the light source modules in Fig. 7(b). Fig. 7(a) and Fig. 7(b) illustrate a calibration region 200 of the light source module A, a calibration region 300 of the light source module B, a calibration region 400 of the light source module C, and a calibration region 500 of the light source module D. A splicing overlapping area 600 is present in the calibration regions of the light source modules. Therefore, in the calibration process of each of the light source modules, a calibration identification point matrix may be in the same coordinate system, so there is no need to convert the pixel coordinate system or the projection feature point matrix coordinate system corresponding to each of the light source modules to the same coordinate system in the subsequent calibration inspection step, which makes the calibration method simpler and faster. It is to be noted that a plurality of calibration tools located in the same coordinate system may also be used for optical calibration processing, which may make the coordinates of the calibration identification points (the photolithographic points) of each calibration tool determinable.

In other embodiments, a plurality of small calibration plates with an area smaller than that of the calibration plate of this embodiment may also be used, and the coverage range of the small calibration plates is consistent with the projection format of a single light source module, so that when calibrating different light source modules, positions of the small calibration plates need to be adjusted according to projection positions of the currently calibrated light source modules. In the subsequent calibration inspection step, it is necessary to convert the pixel coordinate system or the projection feature point coordinate system corresponding to each optical machine to the same coordinate system.

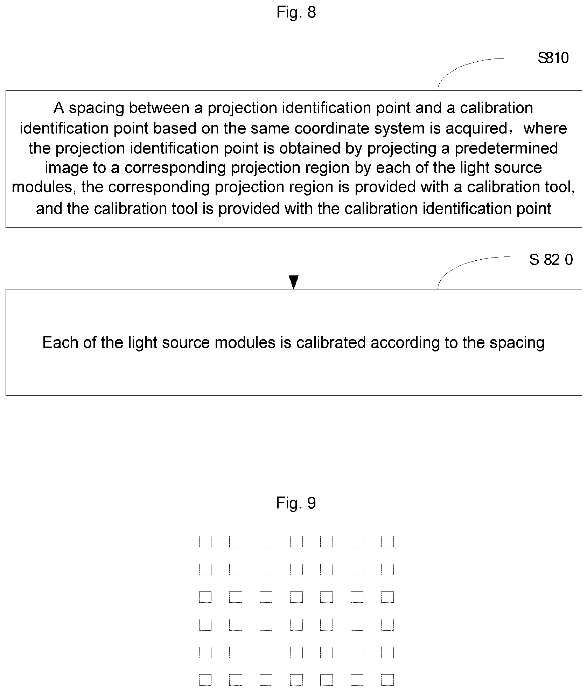

Referring to Fig. 8, which illustrates a schematic diagram of performing optical calibration processing on each of the light source modules, the step includes following steps:

S810: A spacing between a projection identification point and a calibration identification point based on the same coordinate system is acquired. The projection identification point is obtained by projecting a predetermined image to a corresponding projection region by each of the light source modules, the corresponding projection region is provided with a calibration tool, and the calibration tool is provided with the calibration identification point.

The positions of the calibration identification points and the positions of the projection identification points may be staggered. An ideal projection map is a dot matrix map formed by projection points, and the calibration plate is also provided with a corresponding dot matrix map. For better identification of the calibration points and the projection points, the positions of the calibration plate and the positions of an actual projection map are staggered.

For example, the spacing under the same coordinate system refers to a spacing calculated after rotating and translating one or both of the projection identification points and the calibration identification points to be under the same coordinate system.

S820: Each of the light source modules is calibrated according to the spacing.

For example, calibrating each of the light source modules according to the spacing, i.e., performing reverse distortion processing on an image to be projected, includes: converting the spacing to an offset in the pixel coordinate system, and calibrating each of the light source modules according to the offset. Converting the spacing to an offset in the pixel coordinate system includes: constructing a corresponding spacing value matrix on the basis of the spacing, and associating each of parameters in the spacing value matrix with the pixel coordinate system; performing a fitting operation on the spacing value matrix to obtain a target matrix; and obtaining the offset on the basis of the target matrix, element coordinate position information of the pixel coordinate system, and a physical dimension corresponding to a unit pixel. In the step of obtaining the offset, the offset is obtained on the basis of the following formula:

$$C_1 = C_0 + T'_0 P'$$

where $C_1$ denotes the offset, $C_0$ denotes the element coordinate position information, $T_0'$ denotes the target matrix, and P' denotes the physical dimension corresponding to the unit pixel.

In this embodiment, referring to Fig. 9, the predetermined image is divided into a number of grid regions, and the vertex of each of the grid regions is shown as the projection identification point. The grid may be a polygonal grid, for example a rectangular square grid. The predetermined image projected by each of the light source modules is divided into (m-1)*(n-1) square grid regions, and the four corner points of each of the square grid regions are used as the projection identification points, i.e., m*n projection identification points are included. At the same time, an overlapping region is present between formats of the projection images of the adjacent light source modules, and the size of the overlapping region is an integer multiple of the square regions in the corresponding direction. There are projection identification points overlapping in the splicing area between adjacent light source modules, and the overlapping (splicing) direction includes a transverse and/or longitudinal direction in an array of the m*n projection identification points. In other words, there are an integer number of rows of projection identification point groups, in transverse edges of the standard projection image of each of the light source modules, overlapping projection identification point groups of other light source modules adjacent to the light source module in the transverse direction; and simultaneously or not simultaneously, there are an integer number of columns of projection identification point groups, in longitudinal edges of the standard projection image of each of the light source modules, overlapping projection identification point groups of other light source modules adjacent to the light source module in the longitudinal direction. The projection overlapping region of each of the light source modules includes an overlapping region in one or two or three or four directions as described above.

The optical calibration processing (or referred to as calibration operation) is performed on the each of the light source modules through projecting standard projection image individually. Referring to Fig. 7, in this embodiment, a plurality of light source modules are calibrated on the basis of the same calibration plate. For example, the calibration plate is kept immobile after being placed on the printing surface, the calibration plate is divided into a plurality of calibration regions corresponding to the light source modules, and the projection identification points of each of the light source modules may be in one-to-one correspondence with the calibration identification points in the corresponding calibration region of the light source module. It can be understood that a splicing area may be present between the calibration regions of adjacent light source modules.

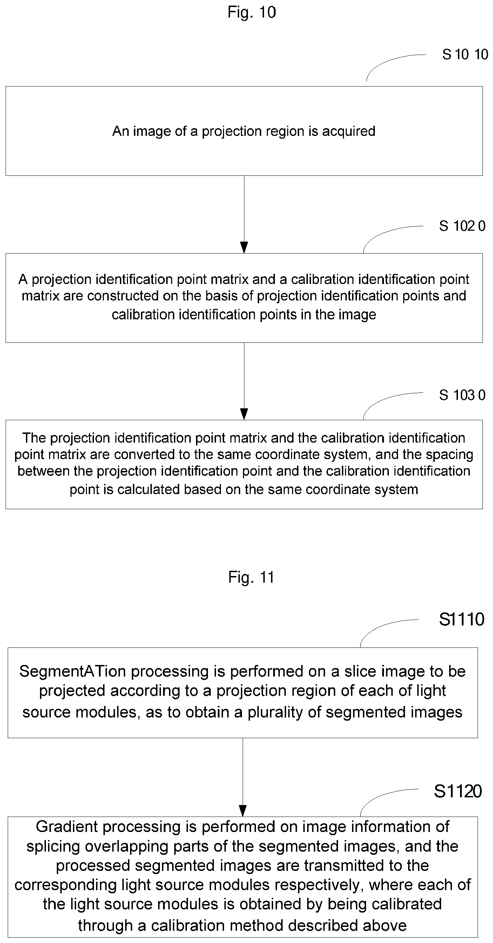

Referring to FIG. 10, which illustrates a schematic diagram of acquiring a spacing between a projection identification point and a calibration identification point based on the same coordinate system, the step includes following steps.

S1010: An image of a projection region is acquired.

For example, the calibration plate is placed on a printing surface, and the calibration plate is divided into a calibration region corresponding to a light source module to be calibrated; and the light source module to be calibrated is set to project the standard projection map to the calibration region (or the projection region) of the calibration plate, the standard projection map being provided with projection identification points. The image of the projection region may be obtained by using any image acquisition device. A captured image of the printing surface (i.e., the projection region) is acquired, the captured image including the projection identification points and calibration identification points.

S1020: A projection identification point matrix and a calibration identification point matrix are constructed on the basis of the projection identification points and the calibration identification points in the image.

S1030: The projection identification point matrix and the calibration identification point matrix are converted to the same coordinate system, and the spacing between the projection identification point and the calibration identification point is calculated based on the same coordinate system.

For example, the projection point matrix and/or the calibration point matrix are/is rotated and translated, and then the spacing between the projection identification points and the calibration identification points in the image coordinate system is calculated. The same coordinate system refers to the image coordinate system.

In this embodiment, prior to converting the spacing to the offset in the pixel coordinate system, the calibration point matrix and the projection point matrix subjected to rotation and translation are first determined:

$$P_1' = R_1 P_1; \ P_2' = R_2 P_2$$

where $P_1'$ denotes the calibration identification points after rotation, $P_2'$ denotes the projection identification points after rotation, and $R_1$ and $R_2$ both denote rotation matrix parameters.

For the rotation operation, the principle is as follows:

$$\begin{cases} x = x' \cos\theta - y' \sin\theta \\ y = x' \sin\theta + y' \cos\theta \end{cases}$$

A corresponding matrix operation method is:

$$\begin{bmatrix} x \\ y \end{bmatrix} = \begin{bmatrix} \cos\theta & -\sin\theta \\ \sin\theta & \cos\theta \end{bmatrix} \begin{bmatrix} x' \\ y' \end{bmatrix} = R \begin{bmatrix} x' \\ y' \end{bmatrix}$$

where

$$R = \begin{bmatrix} \cos\theta & -\sin\theta \\ \sin\theta & \cos\theta \end{bmatrix}$$

In the rotation operation, a deflection angle $\theta$ may be calculated by calculating an included angle through taking points in the oblique direction, taking points in the horizontal direction or taking points in the vertical direction (equivalent to taking an oblique line, a horizontal line or a straight line to calculate the deflection angle of the line segment).

Upon completion of the rotation operation, the spacing value $T_0$ is calculated. The calculation method of $T_0$ is $P_2' - P_1' - T'$ , indicating the spacing value between the calibration identification points and the projection identification points in the image coordinate system, and the following $T_0$ matrix is obtained:

$$T_0 = \begin{bmatrix} d_{1,1} & \cdots & d_{1,n} \\ \vdots & \ddots & \vdots \\ d_{m,1} & \cdots & d_{m,n} \end{bmatrix}$$

T' is taken from a region with the smallest amount of distortion (currently a middle region is of the smallest amount of distortion by default, of course, an actual region with the smallest amount of distortion may also be found in the entire region by the least squares method). Subtracting T' is equivalent to translating the matrix.

Next, each parameter in the $T_0$ matrix needs to be correlated with the pixel coordinate system. This embodiment may obtain the result $T_0'$ (i.e., the target matrix) by the fitting operation, the matrix size thereof is the same as the resolution size of the image, and offset calculation for all pixels in the image is stored in the result.

$$T_0' = \begin{bmatrix} d_{1,1}' & \cdots & d_{1,j}' \\ \vdots & \ddots & \vdots \\ d_{k,1}' & \cdots & d_{k,j}' \end{bmatrix}$$

(where j and k correspond to resolution length and width values of the image, respectively)

For example, combined with a resolution situation of light source modules on the current market, j × k may be 1920×1080, 2560×1440, 3840×2160, etc.

Finally, position information of all pixels in the image in pixel coordinate system may be calculated, i.e.

$$C_1 = C_0 + T_0' P'$$ .

$$C_1 = \begin{bmatrix} S_{1,1}' & \cdots & S_{1,j}' \\ \vdots & \ddots & \vdots \\ S_{k,1}' & \cdots & S_{k,j}' \end{bmatrix}, C_0 = \begin{bmatrix} S_{1,1} & \cdots & S_{1,j} \\ \vdots & \ddots & \vdots \\ S_{k,1} & \cdots & S_{k,j} \end{bmatrix}$$

where $C_0$ denotes the element coordinate position information of the image, and P' denotes the physical dimension corresponding to the unit pixel.

Upon completion of calibration of all the light source modules, the position information of the pixels in all the calibration regions may be obtained:

$$C = \begin{bmatrix} C_{1,1} & \cdots & C_{1,e} \\ \vdots & \ddots & \vdots \\ C_{f,1} & \cdots & C_{f,e} \end{bmatrix}$$

(f and e denote the number of rows and columns of a single optical machine array).

The projection region of each of the light source modules takes the calibration identification points within the calibration plate as a reference coordinate system, and each of the projection identification points after calibration has the same coordinate as a corresponding calibration identification point. In addition, by sharing the calibration plate, each of the light source modules may achieve splicing of a sub-pixel level after calibration.

Referring to Fig. 11, which illustrates a schematic diagram of a projection method, the method includes following steps.

S1110: Segmentation processing is performed on a slice image to be projected according to a projection region of each of light source modules, as to obtain a plurality of segmented images.

For example, each segmented image includes a splicing overlapping part shared with an adjacent segmented image. The size of each of the segmented images may be consistent with the size of the corresponding projection region.

S1120: Gradient processing is performed on image information of splicing overlapping parts of the segmented images, and the processed segmented images are transmitted to the corresponding light source modules respectively, where each of the light source modules is obtained by being calibrated through the calibration method described above. Image information is used to reflect characteristics of an image, and may be embodied in the form of a matrix, for example, the image information may be gray scale, illuminance, light intensity, and other relevant parameters.

For example, an image segmenting boundary may be set in accordance with calibration identification points at an edge of a splicing part.

Gray scale processing is performed on an edge of a projection image of each optical machine on the basis of the image segmenting boundary, so that the image information of the projection image of each optical machine in the splicing overlapping part is stepwise gradient. For example, an image information value decreases in a direction toward the edge of the splicing part (from inner sides to edge sides of the segmented images), or the image information value increases in the direction toward the edge of the splicing part, which is consistent with the form of gradual change. It is to be noted that the gradual change is not limited to increasing or decreasing, but may also have other gradual change forms, and the above two gradual change forms are merely used for exemplary illustration.

In one specific example, performing gradient processing on image information of the splicing overlapping parts of the segmented images includes: performing image processing on the splicing overlapping part of any one of the segmented images, so that the splicing overlapping part is divided into a plurality of sub-parts on the basis of the image information. An image information overlay value of each of the segmented images in the corresponding sub-parts falls within a predetermined range.

For example, the splicing overlapping part may be divided into a plurality of sub-parts, and for N segmented images to be spliced, any one of the sub-parts has a corresponding sub-part overlapping with it in all the segmented images. The image information overlay values of the N segmented images in the N overlapping sub-parts fall into a predetermined range. The predetermined range may include a plurality of values or may be only one value. Taking the gray scale of an 8-bit image as an example, a gray overlay value may be set to range from 0 to 255, or may be set as a value greater than 255, for example, 260. By setting the gray overlay value as a value greater than 255, the impact of an interval of lighting moments of the optical machines on splicing may be further reduced. The above projection method may also segment an image to be entirely projected in accordance with a calibration benchmark, and perform algorithmic processing on edges of segmented images to optimize the sub-pixel level defects after calibration, thereby achieving a smooth printing transition between a splicing part and a non-splicing part and achieving an effect of seamless splicing.

In one specific example, in the case where the number of light source modules corresponding to the splicing overlapping parts is a first predetermined number, an image information value of any one of the splicing overlapping parts decreases in a stepwise manner along a first direction, and remains unchanged along a second direction. The first direction is a splicing direction of the segmented images and is a direction from the inner sides to the edge sides of the segmented images, and the first direction is perpendicular to the second direction.

In the case where the number of light source modules corresponding to the splicing overlapping parts is a second predetermined number, the image information value of any one of the splicing overlapping parts decreases in a stepwise manner along the first direction. The second predetermined number is greater than the first predetermined number.

Two segmented images overlap along the splicing direction and form a splicing overlapping part.

For example, the number of light source modules corresponding to the splicing overlapping parts is the number of light source modules projecting toward the splicing overlapping parts. When one-dimensional splicing is performed, the number of light source modules corresponding to the splicing overlapping parts is two. When two-dimensional splicing is performed, there are splicing overlapping parts corresponding to four light source modules, and splicing overlapping parts corresponding to two light source modules. The first predetermined number may be 2, and the second predetermined number may be 4.

In the case where the number of light source modules corresponding to the splicing overlapping parts is the first predetermined number (for example, 2), that is, the splicing overlapping parts correspond to two segmented images, the two segmented images are named a first segmented image and a second segmented image for ease of illustration. In the case where the first segmented image is relatively on a left side and the second segmented image is relatively on a right side, the splicing overlapping part of the images is located on a right side of the first segmented image and on a left side of the second segmented image, respectively. The splicing direction is a transverse direction (from left to right or from right to left), and the first direction is from left to right when combined with the direction from the inner sides to the edge sides of the segmented images. For the first segmented image, the image information value of the splicing overlapping part decreases from left to right (from the inner side to the edge side of the segmented image). For the second segmented image, the image information value of the splicing overlapping part decreases from right to left (from the inner side to the edge side of the segmented image). It is to be noted that decreasing does not mean strictly monotone decreasing alone, as long as decreasing is met. By performing splicing in this manner, the impact caused by splicing misalignment may be reduced.

In the case where the number of light source modules corresponding to the splicing overlapping parts is the second predetermined number (for example, 4), that is, the splicing overlapping parts correspond to four segmented images, the four segmented images are named a third segmented image, a fourth segmented image, a fifth segmented image, and a sixth segmented image for ease of illustration. If the third segmented image is in the upper left, the fourth segmented image is in the upper right, the fifth segmented image is in the lower left, and the sixth segmented image is in the lower right, the splicing overlapping part is in a lower right corner of the third segmented image, in a lower left corner of the fourth segmented image, in an upper right corner of the fifth segmented image and in an upper left corner of the sixth segmented image. The first direction may be two directions. For the third segmented image, the splicing directions are transverse and vertical, and when combined with the direction from the inner side to the edge side of the segmented image, the first direction is from top to bottom and from left to right. Therefore, the image information value of the splicing overlapping part of the third segmented image decreases in a stepwise manner from left to right and from top to bottom. Similarly, the image information value of the splicing overlapping part of the fourth segmented image decreases in a stepwise manner from right to left and from top to bottom; the image information value of the splicing overlapping part of the fifth segmented image decreases in a stepwise manner from left to right and from bottom to top; and the image information value of the splicing overlapping part of the sixth segmented image decreases in a stepwise manner from right to left and from bottom to top.

In one example, a trend of change of first image information distribution and a trend of change of second image information distribution are in a mirror relationship or an approximate mirror relationship; the first image information distribution is image information distribution of the splicing overlapping part of either of adjacent segmented images; the second image information distribution is image information distribution of the splicing overlapping part of the other segmented image of the adjacent segmented images; and a flip axis of the mirror relationship is determined according to a position of either of the segmented images and a position of the other segmented image.

For example, in the case of left-right mirroring, if the trend of change of the first image information distribution on a left side is from large to small, the trend of change of the second image information distribution on a right side is from small to large. The approximate mirror relationship means that the trend of change may be partially in a mirror relationship and partially not in a mirror relationship, or may be a non-strict mirror relationship.

Further, first image information and second image information are in a mirror relationship or an approximate mirror relationship; the first image information is image information of the splicing overlapping part of either of adjacent segmented images; the second image information is image information of the splicing overlapping part of the other segmented image of the adjacent segmented images; and a flip axis of the mirror relationship is determined according to a position of the either of the segmented images and a position of the other segmented image. The approximate mirror relationship means that the trend of change may be partially in a mirror relationship and partially not in a mirror relationship, or may be a non-strict mirror relationship.

In an example, taking the image information being gray scale as an example, there are at least two light source modules, and the projection method includes following steps.

The light source modules are physically spliced.

Optical calibration is performed on each of the light source modules by using a calibration plate, the calibration plate including calibration identification points;

Calibration inspection for splicing overlapping of each of the light source modules subjected to optical calibration is performed; and

An overall projection image is segmented to obtain a plurality of projection sub-images corresponding to the number of the light source modules, and then gray scale gradient processing is performed on a splicing part of each of the projection sub-images. The step includes: setting an image segmenting boundary in accordance with calibration identification points at an edge of the splicing part; performing gray scale processing on an edge of the projection image of each optical machine on the basis of the image segmenting boundary, so that the gray scale of the projection image of each optical machine in the splicing part decreases in a direction toward the edge of the splicing part.

The overall image is segmented by taking coordinates of the calibration points at the edge of the splicing part as the basis for formulating the image segmenting boundary, the edge of the projection image of each optical machine is processed starting from the image segmenting boundary, a pixel projection map of the splicing part is subjected to stepwise gray scale computation, and the gray scale of the splicing part of each optical machine decreases in a gradient manner from the center to the edge (e.g., monotonically decreasing or non-monotonically decreasing). At the same time, in the decreasing process, gradient overlay (that is, each time the decrease is carried out, a gray value of the gradient is overlaid, the gradient is not cleared, and is constantly overlaid) is met, and the overlaid gray value of the gradient may be a fixed value, or within a certain value interval. In simple terms, taking an 8-bit image as an example, if the fixed value is 255, a overlaid gray value of 250 of the gradient is also acceptable. Because for a final printing effect, a gray value of 250, 255 or 253 is acceptable. The processed images are normally spliced together, processed by an upper computer through image processing hardware, and distributed to each designated optical machine to project.

After the projection image of each optical machine is processed by the above steps, projection images of each of the light source modules may be fused into a large-format projection image consistent with an initial projection image.

In one embodiment, performing gray scale processing on an edge of the projection image of each optical machine on the basis of the image segmenting boundary includes following steps.

A first pixel gray scale distribution from inside to outside of the projection image of each optical machine in the splicing part, and a second pixel gray scale distribution from inside to outside of the projection image of an adjacent optical machine in the splicing part are acquired; and

A gray overlay value of the overlapping region of the adjacent optical machines is determined on the basis of the first pixel gray scale distribution and the second pixel gray scale distribution, and a defect in the projection image of each optical machine is corrected on the basis of the gray overlay value.

In this embodiment, pixels in a column a and a row b at the column and row boundary of each optical machine are set as the splicing part.

1. When one of a and b is 0, the projection splicing of each optical machine is one-dimensional splicing, that is, the projection region of each optical machine overlaps the projection region of other adjacent optical machines by the column a or the row b of pixels.

When b=0 is set, the maximum gray scale of printing exposure is u, and the pixel gray scale distribution from inside to the edge of the edge of the projection region of each optical machine (i.e., the first pixel gray scale distribution) is:

$$a=\{a_1,\ a_2,\ ...,\ a_{a-1},\ a_a\},\text{ and } u \geq a \geq 0,$$

where a is approximately a decreasing sequence of numbers.

The pixel gray scale distribution from inside to the edge of the projection edge of an adjacent optical machine (i.e., the second pixel gray scale distribution) is:

$$a'=\{,a_a,\ a_{a-1},\ ...,\ a_2,\ a_1\}.$$

The gray overlay value of the overlapping region is p, that is,

p=a+a', where the value of p is set according to an actual printing process.

On the one hand, the value of p may be a fixed value. The light intensity of a non-splicing part is set to be q, and $q + v \geq p \geq q - v$, where v is selected according to the degree of influence of a difference in gray values on the actual printing effect. In other words, p may be directly equal to the light intensity q of the non-splicing part, or may be slightly greater or slightly less than q.

On the other hand, p may not be a fixed value. p may be a plurality of values, but the value range of p is $q + v \geq p \geq q - v$, where v is selected according to the degree of influence of the difference in gray values on the actual printing effect. In other words, p is a value that fluctuates within a certain range, however, in actual print molding, the difference in p does not significantly affect the consistency of the printing effect.

By means of the edge processing method, the light intensity of the splicing part may be consistent with or approximate the light intensity of the non-splicing part, so that printing splicing marks are mitigated, and the impact of splicing misalignment may be reduced.

When the overlapping region is offset by one pixel in the same direction as an array a due to splice, that is, the splicing part: $A = \{a_1, a_2, ..., a_{a-1}\}$, and $u \geq A \geq 0$, A is approximately an arithmetic decreasing sequence of numbers.

$$A'=\{a_{a-1}, ... , a_2, a_1\}.$$

The gray overlay value of the overlapping region is changed as $P=A+A'$. That is, an approximate change of $a_2-a_1$ occurs with respect to p, and the gray scale of the non-overlapping region increases by $a_a$.

When the number of terms of the array a is sufficiently large and $a_a$ is small enough, the offset of one pixel in the same direction as the array a has little influence on the gray overlay value, and may be considered as having no influence on the set gray overlay value P.

When P=260 is set, a format A and a format B are spliced, the pixel arrangement of the format A is an arithmetic progression from left to right, the pixel arrangement of the format B is an arithmetic progression from right to left, and the sum of gray scale after overlay is 260; and with one pixel misaligned in the transverse direction, a difference between the maximum gray overlay value of the splicing part and the pixel gray scale of a normal region is merely a tolerance value.

Similarly, when P=15 or 16 is set, a format A1 and a format A2 are spliced transversely, the pixel arrangement of the format A1 is an arithmetic progression from left to right, the pixel arrangement of the format A2 is an arithmetic progression from right to left, and the sum of gray scale after overlay is 15 or 16; and with one pixel misaligned in the transverse direction, the gray overlay value of the splicing part has little difference from the pixel gray scale of 15 or 16 of the normal region.

When the overlapping region is offset by one pixel from the array a in the vertical direction due to splice, that is, overlapping of edge pixels in the vertical direction of the splicing part is changed, non-edge pixels remain consistent and unchanged. The distribution of edge pixels of the overlapping region in the vertical direction is then:

$$A'' = \{a_1, a_2, ..., a_{a-1}, a_a\}, \text{ and } u \geq a \geq 0,$$

which is approximately an arithmetic progression;

$$A'''=\{0,0,... , 0,0\};$$

and

$$P'=A''+A'''=A''.$$

In this case, P' is expressed as a gray scale approximate arithmetic decreasing sequence of numbers, and in the macroscopic image is expressed as a diagonal line of a pixel width, so that one pixel offset in the vertical direction has a gradient transition, and no obvious step exists after printing, achieving a smooth transition.

If there is one pixel offset in the vertical direction at a splicing position, a natural gray scale fold transition appears. Corresponding to actual 3D printing, the pixel offset position may be molded into a smooth diagonal line, without obvious splicing marks.

2. When neither of pixels in the column a and the row b is 0, the projection splicing of each optical machine is two-dimensional splicing, that is, the projection region of each optical machine overlaps other adjacent single optical machines by a and b. The overlay of the projection edge of each optical machine with the edge of the adjacent single optical machine has the same effect as the one-dimensional overlay above. For overlay with adjacent corners, the corners include corner overlapping of four single optical machines.

The arrangement of pixels within four corner overlay regions is in a shape of rectangle. The pixel settings in the regions are simultaneously affected by settings of the arithmetic progressions of the column a and the row b, and are set as pixel groups of a row e and a column f according to the number of pixels, a gray scale approximate arithmetic value between adjacent pixels is c, and an expected gray overlay value in a single format is P1, thereby constituting pixel gray scale arrangement as shown in Table 1.

Table 1 Pixel gray scale arrangement

| P1-c | P1-2c | ..... | P1-(f-1) * c | P1-f * c |
|---|---|---|---|---|
| P1-2c | ..... | | | |
| .... | | | | ..... |
| P1-(e-1) * c | | | ..... | P1-(e+f-3) * c |
| P1-e * c | | ..... | P1-(e+f-3) * c | P1-(e+f-2) * c |

In Table 1, c=P/(e+f-1). Because the gray value is an integer value, the value of c may be adjusted appropriately to change a difference of several terms in the progression for compensation. The progression is approximately an arithmetic progression.

Upon pixel gray scale overlay of four corners, the gray value distribution in the region is about 2P, as shown in Table 2.

Table 2 Pixel gray scale overlay arrangement

| 2P1 | 2P1 | ..... | 2P1 | 2P1 |
|---|---|---|---|---|
| 2P1 | ..... | | | |
| .... | | | | |
| 2P1 | | | | |
| 2P1 | | | | 2P1 |

During projection, the gray overlay value P1 in the region in a single format is set to be half of the gray overlay value p of the overlapping region, that is, p=2P1. The overlay value of the splicing part may meet a fixed value p. The gray scale distribution in the region meets two-dimensional approximate arithmetic distribution. The misalignment of splicing is similar to one-dimensional splicing changes, and the arrangement may reduce the impact of misalignment.

For example, when a print image is spliced by 4 pieces, the original resolution is first dis-spliced and divided into 1/2/3/4 images. The edges of the images are subjected to the above gradient processing, and the images are sent to corresponding single-format optical machine systems. Finally, an image the same as the initial projection image may be displayed.

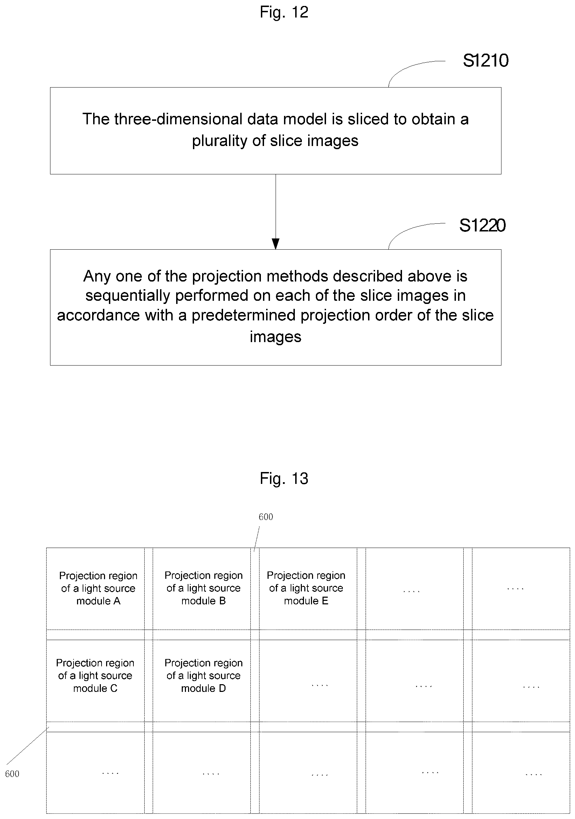

Referring to Fig. 12, which illustrates a schematic diagram of slicing a three-dimensional data model, the step specifically includes following steps.

S1210: The three-dimensional data model is sliced to obtain a plurality of slice images.

S1220: Any one of the projection methods described above is sequentially performed on each of the slice images in accordance with a predetermined projection order of the slice images.

In one embodiment, a schematic flow diagram of a 3D printing method is provided. The method specifically includes following steps.

Light source modules are physically spliced; optical calibration is performed on each of the light source modules by using a calibration plate, the calibration plate including calibration identification points; calibration inspection for splicing overlapping of each of the light source modules subjected to optical calibration is performed; on the basis of a result of calibration inspection, defects correction is performed on a projection image of each of the light source modules; a three-dimensional data model is sliced to obtain N slice layer images, where N>1; each of the slice layer images is segmented to obtain M slice layer sub-images, and then gray scale gradient processing is performed on an splicing part of each of the slice layer sub-images; for each of the slice layer images, the corresponding M slice layer sub-images are obtained, and each of the light source modules is controlled to project to a molding interface according to each of the slice layer sub-images, so that a light curing material has a cross-linking reaction to form a curing layer corresponding to each of the slice layer images; and curing layers are accumulated one by one to obtain a three-dimensional entity corresponding to the three-dimensional data model.

Embodiments of the present disclosure further disclose a 3D printing format splicing system. The splicing system is based on the 3D printing method, and includes a physical splicing debugging system, a single format calibration system, and a display algorithm system.

The physical splicing debugging system includes a physical adjustment structure and a format alignment tool. On a 3D printing-based platform, a spatial position of single-format exposure units is adjusted through the physical adjustment structure, and all the single-format exposure units are spliced together with the assistance of the format alignment tool to form a combined format of which the splicing accuracy is within 10 pixels (within about 1 mm) and an splicing difference is not discernible to the naked eyes. The combined format has a splicing overlapping part 600, as shown in Fig. 13.

The light source modules to be calibrated may project an ideal projection map onto a projection platform, and the light source modules may be provided at a top or bottom of the projection platform, which is not limited herein. The ideal projection map is a dot matrix map formed by ideal projection points, and a calibration plate is also provided with a corresponding dot matrix map formed by calibration points. However, projection points (including the ideal projection points and actual projection points) are different from reference points, and "different" may be a difference in color or a difference in shape. For this embodiment, in an image captured by a camera, the projection points are presented as white points and the reference points are presented as black points, which is conducive to distinguishing the reference points from the projection points.

It is to be reminded that the shape, number, and size of sampling points (including the reference points and the projection points) may be set according to the demand, which is not limited in this embodiment. The sampling points may be easily recognizable patterns such as squares, circles (i.e., dots), triangles and polygons. After the calibration plate is placed, the camera may shoot the projection platform to capture the calibration plate and an actual projection map. The actual projection map undergoes barrel distortion with respect to the ideal projection map. In the image captured by the camera, a center of the calibration plate does not coincide with a center of the actual projection map, the calibration plate is staggered with the actual projection map, and some or all of the projection points do not coincide with the reference points.

In an example embodiment, in order to ensure the clarity of shooting, the camera may take multiple clear pictures of all the projection points and reference points by taking multiple shots. After shooting, a calibration module may process the captured images to identify the calibration points and the projection points, and obtain coordinates of the calibration points and the projection points. It is to be noted that the single-format calibration system may be a separate device independent of a 3D printer, or may be formed by supporting calibration components and some parts of the 3D printer. For example, the supporting calibration components may include the camera, the calibration plate, and the calibration module, and the projection platform may be a light-transmitting plane provided on a frame of the 3D printer or a bottom surface of a tray of the 3D printer.

In one embodiment, as shown in Fig. 14, a calibration apparatus for splicing light source modules is provided. There are at least two light source modules. The apparatus includes: a calibration apparatus configured to perform optical calibration processing on each of the light source modules, a splicing overlapping area being present in projection regions of the light source modules; and an inspection apparatus configured to perform, in the splicing overlapping area, calibration accuracy inspection on each of the light source modules subjected to optical calibration processing.

In one embodiment, a 3D printer is provided. The 3D printer includes a memory and one or more processors, the memory having stored a computer-readable instruction, and the processor, when executing the computer-readable instruction, implementing the steps of any one of the methods described above.

In one embodiment, a non-volatile computer-readable storage medium having stored thereon a computer-readable instruction is provided. When the computer-readable instruction is executed by a processor, the steps of any one of the methods described above are implemented.

It is to be understood that although the individual steps in the above flow diagrams are shown sequentially as indicated by the arrows, the steps are not necessarily performed sequentially in the order indicated by the arrows. Unless expressly stated herein, there is no strict order in which the steps are performed, and the steps may be performed in other orders. Moreover, at least a portion of the steps in the figure may include a plurality of sub-steps or a plurality of stages, which are not necessarily performed to completion at the same moment, but may be performed at different moments, and the order in which the sub-steps or stages are performed is not necessarily sequential, but may be performed in turn or alternately with other steps or at least a portion of sub-steps or stages of other steps. The embodiments in the specification are described in a progressive manner, where each embodiment focuses on the differences from other embodiments, and the same or similar parts between the embodiments may be cross-referenced. Since the system disclosed by the embodiments corresponds to the method disclosed by the embodiments, the description is relatively simple, and reference may be made to the description of the method section for relevant information. It is to be noted that a person of ordinary skill in the art may also make improvements and modifications to the present disclosure without departing from the principles of the present disclosure, and these improvements and modifications also fall within the scope of protection of the claims of the present disclosure.

It is also to be noted that in this specification, relational terms such as "first" and "second" are merely used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements not only includes those elements, but also includes other elements not clearly listed, or also includes elements inherent to this process, method, article or device. An element proceeded by the phrase "comprises a" does not, without more constraints, preclude the existence of additional identical elements in the process, method, article, or device that includes the element.

**Industrial applicability**

The solutions provided by the embodiments of the present disclosure may be applied in the technical field of 3D printing. In the embodiments of the present disclosure, optical calibration processing is performed on each of light source modules, a splicing overlapping area being present in projection regions of the light source modules subjected to optical calibration processing; and on the basis of the splicing overlapping area, calibration accuracy inspection is performed on each of the light source modules subjected to optical calibration processing. By means of the embodiments of the present disclosure, splicing ripples and disturbances of pixel information during splicing may be avoided, thereby solving the problem of splicing defects generated by splicing of the light source modules and improving the projection effect and the 3D printing effect.

**Claims**

1. A calibration method for splicing light source modules, wherein there are at least two light source modules, and the method comprises:

    performing optical calibration processing on each of the light source modules, wherein an splicing overlapping area is present in projection regions of the light source modules subjected to optical calibration processing; and performing, on a basis of the splicing overlapping area, calibration accuracy inspection for splicing overlapping of each of the light source modules subjected to optical calibration processing.

2. The calibration method for splicing light source modules according to claim 1, before the performing calibration accuracy inspection for splicing overlapping of each of the light source modules subjected to optical calibration processing, further comprising:
   physically splicing each of the light source modules, so that projection region of each of the light source modules meets a predetermined projection format requirement.

3. The calibration method for splicing light source modules according to claim 2, the physically splicing each of the light source modules comprises:
   adjusting a horizontal position of each of the light source modules so that a spacing between a boundary of a first feature image of each of the light source modules and a border of a calibration tool meets a first predetermined distance, and a spacing between a second feature image projected by each of the light source modules and an auxiliary image meets a second predetermined distance, wherein the calibration tool is provided on a printing surface, and the auxiliary image is provided on the calibration tool.

4. The calibration method for splicing light source modules according to claim 3, before the adjusting a horizontal position of each of the light source modules, further comprising:
   adjusting a levelness of each of the light source modules with respect to the printing surface, and a vertical distance between each of the light source modules and the printing surface, so that a projection format of the light source modules reaches a predetermined dimension.

5. The calibration method for splicing light source modules according to claim 1, further comprising:
   adjusting a projection format of each of the light source modules subjected to optical calibration processing, so that a deflection angle and an offset of each of the projection formats respect to a reference format meet a first predetermined requirement.

6. The calibration method for splicing light source modules according to claim 5, wherein the first predetermined requirement comprises that a difference between deflection angles is within a first predetermined range, wherein each deflection angle is a deflection angle of a corresponding projection format relative to the reference format, and a difference between offsets is within a second predetermined range, wherein each offset is an offset of a corresponding projection format relative to the reference format.

7. The calibration method for splicing light source modules according to claim 1, the performing calibration accuracy inspection for splicing overlapping of each of the light source modules subjected to optical calibration processing comprises:

acquiring a first current position of a projection feature point and a first standard position corresponding to the projection feature point, wherein the projection feature point is formed by projecting by each of the light source modules subjected to optical calibration processing onto a printing surface;
determining, according to the first current position and the first standard position, a deflection angle and an offset corresponding to each of the light source modules subjected to optical calibration processing; and
determining that the calibration is successful in a case where the deflection angle and the offset of each of the light source modules meet a second predetermined condition.

8. The calibration method for splicing light source modules according to claim 7, the acquiring a first current position of a projection feature point and a first standard position corresponding to the projection feature point comprises:

acquiring image information of the printing surface, wherein the printing surface is provided with a calibration tool, and the calibration tool is provided with a calibration identification point for identifying the first standard position; and
determining, according to the image information, the first current position and the first standard position.

9. The calibration method for splicing light source modules according to claim 7, wherein the second predetermined condition comprises that a deviation between deflection angles of the light source modules is within a third predetermined range, and a deviation between offsets of the light source modules is within a fourth predetermined range.

10. The calibration method for splicing light source modules according to claim 9, wherein the first predetermined condition further comprises that an offset corresponding to any one of the light source modules is within a corresponding predetermined interval.

11. The calibration method for splicing light source modules according to claim 1, wherein the performing calibration accuracy inspection for splicing overlapping of each of the light source modules subjected to optical calibration processing comprises:

acquiring a second current position of an overlapped projection feature point and a second standard position corresponding to the overlapped projection feature point, wherein the overlapped projection feature point is obtained by projection of each of the light source modules subjected to optical calibration processing in the splicing overlapping area; and
determining that the calibration is successful in a case where a deviation value between the second current position and the second standard position meets a second predetermined condition.

12. The calibration method for splicing light source modules according to claim 11, wherein the acquiring a second current position of a projection feature point and a second standard position corresponding to the projection feature point comprises:

acquiring image information of a printing surface, wherein the printing surface is provided with a calibration tool, and the calibration tool is provided with a calibration identification point for identifying the second standard position; and
determining, according to the image information, the second current position and the second standard position.

13. The calibration method for splicing light source modules according to claim 11 or 12, further comprising:
performing optical calibration processing on each of the light source modules again in a case of the deviation value between the second current position and the second standard position without meeting the second predetermined condition.

14. The calibration method for splicing light source modules according to claim 1, wherein the performing optical calibration processing on each of the light source modules comprises:

performing optical calibration processing on each of the light source modules respectively with calibration tools located in the same coordinate system, or

performing optical calibration processing on the light source modules with the same calibration tool, wherein a coverage of a calibration plate is greater than or equal to a projection format formed by splicing the light source modules.

15. The calibration method for splicing light source modules according to claim 1, wherein the performing optical calibration processing on each of the light source modules comprises:

acquiring a spacing between a projection identification point and a calibration identification point based on the same coordinate system, wherein the projection identification point is obtained by projecting a predetermined image to a corresponding projection region by each of the light source modules, the corresponding projection region is provided with a calibration tool, and the calibration tool is provided with the calibration identification point; and

calibrating each of the light source modules based on the spacing.

16. The calibration method for splicing light source modules according to claim 15, wherein the acquiring a spacing between a projection identification point and a calibration identification point based on the same coordinate system comprises:

acquiring an image of the projection region;

constructing a projection identification point matrix and a calibration identification point matrix based on the projection identification point and the calibration identification point in the image; and

converting the projection identification point matrix and the calibration identification point matrix to the same coordinate system, and calculating the spacing between the projection identification point and the calibration identification point based on the same coordinate system.

17. The calibration method for splicing light source modules according to claim 15, wherein the calibrating each of the light source modules based on the spacing comprises:

converting the spacing into an offset in a pixel coordinate system, and calibrating each of the light source modules based on the offset.

18. The calibration method for splicing light source modules according to claim 17, wherein the converting the spacing into an offset in a pixel coordinate system comprises:

constructing a corresponding spacing value matrix on the basis of the spacing, and associating each of parameters in the spacing value matrix with the pixel coordinate system;

performing a fitting operation on the spacing value matrix to obtain a target matrix; and

obtaining the offset based on the target matrix, element coordinate position information of the pixel coordinate system, and a physical dimension corresponding to a unit pixel.

19. The calibration method for splicing light source modules according to claim 18, wherein in the step of obtaining the offset, the offset is obtained based on following formula:

$$C_1 = C_0 + T_0'P'$$

wherein $C_1$ denotes the offset, $C_0$ denotes the element coordinate position information, $T_g$ denotes the target matrix, and P' denotes the physical dimension corresponding to the unit pixel.

20. The calibration method for splicing light source modules according to any one of claims 1 to 19, wherein each of the light source modules is any one or any combination of a digital light processing (DLP) projection module, a liquid crystal display (LCD) projection module, a liquid crystal on silicon (LCOS) projection module, an organic light-emitting diode (OLED) projection module, a Micro-Led module, a Mini-Led module, an LCD module, an OLED module, and a silicon X-tal reflective display (SXRD) projection module.

21. A projection method, comprising:

performing segmentation processing on a slice image to be projected according to a projection region of each of light source modules to obtain a plurality of segmented images; and

performing gradient processing on image information of splicing overlapping parts of the plurality of segmented images, and transmitting the processed segmented images to the corresponding light source modules respectively, wherein each of the light source modules is obtained by being calibrated through the calibration method for splicing light source modules according to any one of claims 1 to 10.

22. The projection method according to claim 21, wherein the performing gradient processing on image information of splicing overlapping parts of the plurality of segmented images comprises:

performing image processing on the splicing overlapping part of any one of the segmented images, so that the splicing overlapping part is divided into a plurality of sub-parts based on image information, wherein an image information overlay value of each of the segmented images in the corresponding sub-part falls into a predetermined range.

23. The projection method according to claim 22, wherein in a case where the number of light source modules corresponding to the splicing overlapping parts is a first predetermined number, an image information value of any one of the splicing overlapping parts decreases in a stepwise manner along a first direction, and remains unchanged along a second direction, wherein the first direction is an splicing direction of the segmented images and is a direction from inner sides to edge sides of the segmented images, and the first direction is perpendicular to the second direction; and

in a case where the number of light source modules corresponding to the splicing overlapping parts is a second predetermined number, the image information value of any one of the splicing overlapping parts decreases in a stepwise manner along the first direction, wherein the second predetermined number is greater than the first predetermined number.

24. The projection method according to claim 22 or 23, wherein a trend of change of first image information distribution and a trend of change of second image information distribution are in a mirror relationship or an approximate mirror relationship; the first image information distribution is image information distribution of an splicing overlapping part of either of adjacent segmented images; the second image information distribution is image information distribution of the splicing overlapping part of the other segmented image of the adjacent segmented images; and a flip axis of the mirror relationship is determined based on a position of either of the segmented images and a position of the other segmented image.

25. The projection method according to claim 24, wherein first image information and second image information are in a mirror relationship or an approximate mirror relationship; the first image information is image information of the splicing overlapping part of either of adjacent segmented images; the second image information is image information of the splicing overlapping part of the other segmented image of the adjacent segmented images; and a flip axis of the mirror relationship is determined based on a position of the either of the segmented images and a position of the other segmented image.

26. The projection method according to any one of claims 21 to 25, wherein the image information comprises one of an illuminance, a light intensity and a gray scale.

27. A 3D printing method, **characterized by** comprising:

slicing a three-dimensional data model to obtain a plurality of slice images; and
sequentially performing the projection method according to any one of claims 21 to 26 on each of the plurality of slice images according to a predetermined projection order of the plurality of slice images.

28. A calibration apparatus for splicing light source modules, wherein there are at least two light source modules, and the calibration apparatus comprises:

a calibration apparatus, configured to perform optical calibration processing on each of the light source modules, wherein an splicing overlapping area is present in projection regions of the light source modules; and
an inspection apparatus, configured to perform, in the splicing overlapping area, calibration accuracy inspection for splicing overlapping of each of the light source modules subjected to optical calibration processing.

29. A 3D printer comprising a memory and one or more processors, the memory having stored a computer-readable instruction, wherein the processor, when executing the computer-readable instruction, implements the steps of the method according to any one of claims 1 to 27.

30. A non-volatile computer-readable storage medium having stored thereon a computer-readable instruction, wherein when the computer-readable instruction is executed by a processor, the steps of the method according to any one of claims 1 to 27 are implemented.

Fig. 1

S110

Optical calibration processing is performed on each of the
light source modules, wherein a splicing overlapping area is
present in projection regions of the light source modules
subjected to optical calibration processing

S120

Calibration accuracy inspection for splicing overlapping is
performed, on the basis of the splicing overlapping area, on
each of the light source modules subjected to optical
calibration processing

Fig. 2

S210

Each of the light source modules is physically spliced, so that projection
region of each of the light source modules meets a predetermined
projection format requirement

S220

Optical calibration processing is performed on each of the light source
modules, wherein a splicing overlapping area is present in projection
regions of the light source modules subjected to optical calibration
processing

S230

Calibration accuracy inspection for splicing overlapping is performed, on
the basis of the splicing overlapping area, on each of the light source
modules subjected to optical calibration processing

Fig. 3

S300

A levelness of each of light source modules with respect to a printing surface, and a vertical distance between each of the light source modules and the printing surface are adjusted, so that projection formats of the light source modules reach a predetermined dimension

S310

A horizontal position of each of the light source modules is adjusted, so that a spacing between a boundary of a first feature image of each of the light source modules and a border of the calibration tool meets a first predetermined distance, and a spacing between a second feature image projected by each of the light source modules and an auxiliary image meets a second predetermined distance, where the calibration tool is provided on the printing surface, and the auxiliary image is provided on the calibration tool

Fig. 4

Fig. 5

Fig. 6

A current position of a projection feature point and a standard position corresponding to the projection feature point are acquired, where the projection feature point is formed by projecting by each of light source modules subjected to optical calibration processing onto a printing surface

S610

A deflection angle and an offset corresponding to each of the light source modules subjected to optical calibration processing are determined according to the first current position and the first standard position

S620

It is determined that the calibration is successful in the case where each deflection angle and each offset meet a second predetermined condition

S630

Fig. 7(a)

Fig. 7(b)

Fig. 8

S810

A spacing between a projection identification point and a calibration identification point based on the same coordinate system is acquired, where the projection identification point is obtained by projecting a predetermined image to a corresponding projection region by each of the light source modules, the corresponding projection region is provided with a calibration tool, and the calibration tool is provided with the calibration identification point

S 82 0

Each of the light source modules is calibrated according to the spacing

Fig. 9

Fig. 10

S 10 10

An image of a projection region is acquired

S 102 0

A projection identification point matrix and a calibration identification point matrix are constructed on the basis of projection identification points and calibration identification points in the image

S 103 0

The projection identification point matrix and the calibration identification point matrix are converted to the same coordinate system, and the spacing between the projection identification point and the calibration identification point is calculated based on the same coordinate system

Fig. 11

S1110

SegmentATion processing is performed on a slice image to be projected according to a projection region of each of light source modules, as to obtain a plurality of segmented images

S1120

Gradient processing is performed on image information of splicing overlapping parts of the segmented images, and the processed segmented images are transmitted to the corresponding light source modules respectively, where each of the light source modules is obtained by being calibrated through a calibration method described above

Fig. 12

S1210

The three-dimensional data model is sliced to obtain a plurality of slice images

S1220

Any one of the projection methods described above is sequentially performed on each of the slice images in accordance with a predetermined projection order of the slice images

Fig. 13

600

| Projection region of a light source module A | Projection region of a light source module B | Projection region of a light source module E | . . . . | . . . . |
| Projection region of a light source module C | Projection region of a light source module D | . . . . | . . . . | . . . . |
| . . . . | . . . . | . . . . | . . . . | . . . . |

600

Fig. 14

Calibration apparatus for
assembling light source modules

Fig. 15

Fig. 16

## INTERNATIONAL SEARCH REPORT

| International application No. |
| --- |
| **PCT/CN2022/119218** |

| A. | CLASSIFICATION OF SUBJECT MATTER |
| --- | --- |

B29C 64/106(2017.01)i;  B29C 64/10(2017.01)i;  G06T 7/80(2017.01)n

According to International Patent Classification (IPC) or to both national classification and IPC

| B. | FIELDS SEARCHED |
| --- | --- |

Minimum documentation searched (classification system followed by classification symbols)

B29C64/-;G06T7/-

Documentation searched other than minimum documentation to the extent that such documents are included in the fields searched

Electronic data base consulted during the international search (name of data base and, where practicable, search terms used)

CNTXT, VEN, DWPI, WPABS, ENTXTC, ENTXT: 广州黑格智造, 丁鹏, 万欣, 肖宏权, 胡骏, 李佳, 光源, 光线, 拼接, 拼合, 重叠, 叠合, 标定, 检验, 校准, 校验, 检测, 偏移量, 距离, 角度, project+, shadow+, overlap+, overlay+, light+, illuminant+, angle?, check+, test+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110625935 A (LI JIA) 31 December 2019 (2019-12-31)<br>description, paragraphs 7-42 and 71, and figures 1-12 | 1-13, 20-27, 29-30 |
| Y | CN 110625935 A (LI JIA) 31 December 2019 (2019-12-31)<br>description, paragraphs 7-42 and 71, and figures 1-12 | 14-19 |
| X | CN 111899308 A (GUANGZHOU HEYGEARS INFORMATION TECHNOLOGY CO., LTD.) 06 November 2020 (2020-11-06)<br>description, paragraphs 4-8 | 28 |
| Y | CN 106200229 A (YLX INCORPORATED) 07 December 2016 (2016-12-07)<br>description, paragraphs 4-26 | 14-19 |
| A | CN 207044689 U (NINGBO HECHUANG RAPID TECHNOLOGY CO., LTD.) 27 February 2018 (2018-02-27)<br>description, paragraphs 12-17, and figure 1 | 1-30 |
| A | CN 106113505 A (GUANGDONG VIVID TECHNOLOGY CO., LTD.) 16 November 2016 (2016-11-16)<br>description, paragraphs 20-24, and figures 1-2 | 1-30 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 November 2022** | **06 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/119218**

**C.     DOCUMENTS CONSIDERED TO BE RELEVANT**

| Category* | Citation of document, with indication, where appropriate, of the relevant passages | Relevant to claim No. |
|---|---|---|
| A | JP 2015210267 A (REMEMBORINES INC.) 24 November 2015 (2015-11-24) description, paragraphs 3-25 | 1-30 |
| A | US 2020031051 A1 (INTR-N INTREPID AUTOMATION.) 30 January 2020 (2020-01-30) description, paragraphs 42-60, and figures 1-2 | 1-30 |

Form PCT/ISA/210 (second sheet) (January 2015)

## INTERNATIONAL SEARCH REPORT
### Information on patent family members

| International application No. |
| --- |
| **PCT/CN2022/119218** |

| Patent document cited in search report | | | Publication date (day/month/year) | Patent family member(s) | | | Publication date (day/month/year) |
| --- | --- | --- | --- | --- | --- | --- | --- |
| CN | 110625935 | A | 31 December 2019 | None | | | |
| CN | 111899308 | A | 06 November 2020 | WO | 2022027891 | A1 | 10 February 2022 |
| CN | 106200229 | A | 07 December 2016 | CN | 106200229 | B | 08 January 2019 |
| CN | 207044689 | U | 27 February 2018 | None | | | |
| CN | 106113505 | A | 16 November 2016 | CN | 106113505 | B | 26 June 2018 |
| JP | 2015210267 | A | 24 November 2015 | US | 2015306824 | A1 | 29 October 2015 |
| | | | | EP | 2940653 | A1 | 04 November 2015 |
| | | | | CA | 2888454 | A1 | 25 October 2015 |
| | | | | AU | 2015201911 | A1 | 12 November 2015 |
| US | 2020031051 | A1 | 30 January 2020 | US | 11338511 | B2 | 24 May 2022 |
| | | | | US | 2021268724 | A1 | 02 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111113482